Europäisches Patentamt

European Patent Office

Office européen des brevets

(19)

(11) Veröffentlichungsnummer: **0 247 020**
**B1**

(12) **EUROPÄISCHE PATENTSCHRIFT**

(45) Veröffentlichungstag der Patentschrift:
**12.09.90**

(51) Int. Cl.⁵: **B32B 15/01, F41H 5/04**

(21) Anmeldenummer: **87890059.6**

(22) Anmeldetag: **25.03.87**

(54) **Panzerblech.**

(30) Priorität: **23.04.86 AT 1093/86**

(43) Veröffentlichungstag der Anmeldung:
**25.11.87 Patentblatt 87/48**

(45) Bekanntmachung des Hinweises auf die Patenterteilung:
**12.09.90 Patentblatt 90/37**

(84) Benannte Vertragsstaaten:
**DE FR IT**

(56) Entgegenhaltungen:
**EP-A- 0 142 042**
**DE-C- 2 142 360**
**FR-A- 1 097 631**
**FR-A- 1 536 829**
**US-A- 2 562 467**

(73) Patentinhaber: **VOEST-ALPINE STAHL LINZ Gesellschaft m.b.H., Turmstrasse 45, A-4020 Linz(AT)**

(72) Erfinder: **Enöckl, Hans, Dipl.-Ing. Dr., Lessingstrass 9, A-4020 Linz(AT)**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Panzerblech mit einem Grundwerkstoff aus zähem Stahl, wie z.B. einem Stahl einer Richtanalyse von 0,10 bis 0,35 Gew.-% C, 0,10 bis 0,70 Gew.-% Si, 0,4 bis 1,50 Gew.-% Mn, 0,80 bis 2 Gew.-% Cr, Rest Eisen und Stahlbegleiter, auf welchen durch Plattieren wenigstens eine harte, dem Beschuß zuzuwendende Auflage aus Stahl, insbesondere vom Typ 85 Cr Mo 7, bestehend aus 0,60 bis 1 Gew.-% C, 0,20 bis 1,20 Gew.-% Si, 0,20 bis 2 Gew.-% Mn, 0,80 bis 2 Gew.-% Cr, 0,05 bis 1 Gew.-% Mo, 0,05 bis 0,35 Gew.-% V, Rest Eisen und Stahlbegleiter aufgebracht ist.

Verbundwerkstoffe zum Zwecke der Erzielung von verbesserten Materialeigenschaften sind bekannt. Es wurde beispielsweise bereits vorgeschlagen, für die Herstellung von Pflugscharen einen relativ weichen, zähen Kern und eine harte Verschleißschicht zu verwenden, wobei derartige Verbundwerkstoffe zumeist im Guß hergestellt wurden. Auch das Plattieren verschiedener Stahlqualitäten miteinander durch Walz- oder Sprengplattieren hat den Zweck, zwei Qualitätsstähle miteinander so zu verbinden, daß von jedem Qualitätsstahl die gewünschten Vorteile gewonnen werden können. Beim Walzplattieren wird das Verbinden beider Werkstoffe im rotglühenden, festen Zustand bei Walztemperaturen vorgenommen, wobei in diesen Fällen auf bestimmte charakteristische Eigenschaften der zu verbindenden Stähle Rücksicht genommen werden muß. Insbesondere muß darauf Rücksicht genommen werden, daß auf diese Weise hergestellte Bleche im Falle einer Wärmebehandlung so behandelt werden können, daß sowohl die Auflage als auch der Grundwerkstoff keine nachteilige Beeinflussung erfährt. Ein Härten und Vergüten muß sich beiden Qualitäten anpassen, wobei dies sowohl für die Wahl der Temperatur als auch für den Abkühlverlauf, insbesondere für die Abschreckbehandlung und das Abschreckmittel, gilt.

Aus der DE-AS 21 42 360 ist bereits ein Verfahren zur Herstellung einer Panzerung bekanntgeworden, bei welchem zwei Bleche, auf welche zuvor durch elektrolytische Abscheidung eine dünne Schicht aus Nickel oder Reineisen aufgebracht wurde, durch Plattieren miteinander verbunden werden.

In der chemischen Industrie wurden bereits walzplattierte Bleche eingesetzt, bei welchen der Grundwerkstoff eine Mindestfestigkeit aufweisen mußte und der Auflagewerkstoff die Korrosionsbeständigkeit gegenüber aggressiven Medien sicherstellen soll. Derartige korrosionsfeste Verbundwerkstoffe sind zumeist nicht für Stoßbelastungen ausgelegt, und Stoßbelastungen auch nicht ausgesetzt. Im Falle derartiger Verbundwerkstoffe hat einer der beiden Werkstoffe die tragende Belastung zu übernehmen und der zweite der beiden Werkstoffe die gewünschte Korrosionsfestigkeit sicherzustellen, wobei allerdings bei der Wahl der Materialien für den Grundwerkstoff darauf Rücksicht genommen werden muß, daß beim Plattieren keine Diffusionsvorgänge beobachtet werden, welche zu einem Lochfraß in der korrosionsbeständigen Schicht führen könnten.

Im besondere wurde für die Herstellung von Panzerblechen bereits vorgeschlagen, einen Grundwerkstoff aus einem Stahl mit ausreichender Zähigkeit und im besonderen einen Stahl mit der Richtanalyse 0,10 bis 0,35 Gew.-% C, 0,10 bis 0,70 Gew.-% Si, 0,4 bis 1,50 Gew.-% Mn, 0,80 bis 2 Gew.-% Cr, Rest Eisen und Stahlbegleiter durch Walzplattieren mit einer harten Auflage eines Stahl vom Typ 85 Cr Mo 7 mit einer Richtanalyse von 0,60 bis 1 Gew.-% C, 0,20 bis 1,20 Gew.-% Si, 0,20 bis 2 Gew.-% Mn, 0,80 bis 2 Gew.-% Cr, 0,05 bis 1 Gew.-% Mo, 0,05 bis 0,35 Gew.-% V, Rest Eisen und Stahlbegleiter zu versehen. Derartige bekannte Panzerbleche haben sich insbesondere bei reibendem Verschleiß, wie z.B. in Mühlen, Mahlwerken od.dgl., sehr gut bewährt. Bei einer Schlagbeanspruchung, wie dies bei Beschuß der Fall ist, hat sich jedoch gezeigt, daß Ablösungen der beiden Verbundwerkstoffe auftreten können. Es wurden Versuchsbleche der obigen Zusammensetzung mit einem Wuchtgeschoß des Kalibers 7,62 mit herkömmlicher Treibladung beschossen. Das Trefferbild zeigte, daß der Werkstoff an sich nicht beschädigt wurde, wenn man von einer mehr oder weniger unbedeutenden Delle absieht. Wenn jedoch ein neuerlicher Treffer in der Nähe des ersten Treffers auftraf, wurde eine Ablösung und ein Abblättern der Auflage beobachtet, welche Durchmesserbereiche bis zu 300 mm erfaßte. Durch ein derartiges Abblättern der harten Auflage wird die Panzerung der gesamten gepanzerten Fläche in Frage gestellt. Unter weiteren Beschüssen wurde ein Bersten der gesamten Auflageplatte beobachtet.

Die Erfindung zielt nun darauf ab, ein Panzerblech der eingangs genannten Art zu schaffen, welches auch eine Mehrzahl von Einschlägen auf der Seite des Auflagewerkstoffes, ohne Zerstörung der Auflageplatte, überdauert. Zur Lösung dieser Aufgabe ist das erfindungsgemäße Panzerblech im wesentlichen dadurch gekennzeichnet, daß jeweils zwischen Grundwerkstoff und Auflage eine Zwischenlage aus Reinnickel oder Reineisen, insbesondere titan- oder niobstabilisiertem Reineisen mit maximal 0,01 Gew.-% C mit einer Dicke zwischen 0,1 und 15 % der Gesamtblechdicke angeordnet ist, welche durch Walzplattieren mit dem Grundwerkstoff und der Auflage verbunden ist. Weitere bevorzugte Ausführungsformen des Panzerbleches sind aus den abhängigen Ansprüchen ersichtlich. Die Anordnung einer Zwischenlage aus relativ weichem Material, welches sich auf bei gegebenenfalls auftretenden Diffusionsvorgängen beim Walzplattieren nicht wesentlich verändert, führt hierbei dazu, daß Auflagewerkstoff und Grundwerkstoff nicht nur einer senkrechten Druckbeanspruchung standhielten, sondern auch die bei mehrfachen Einschlägen auftretenden Deformationen, welche zu Querkräften in der Verbundzone führen, sicher aufgenommen wurden, wodurch ein Abplatzen des Auflagewerkstoffes verhindert wurde. Diese Maßnahme eignet sich in gleichem Maße für mehrlagige Verbundwerkstoffe.

Mit Vorteil weist die Zwischenlage nach dem Verbundwalzen eine Dicke zwischen 1 und 15 % der Gesamtblechdicke auf. Dadurch, daß die Zwischenlage nach dem Verbundwalzen noch eine Dicke von 1 bis 15 % der Gesamtblechdicke aufweist, wird sichergestellt, daß die Zwischenschichte eine vollständige Sperrschicht darstellt. Als besonders vorteilhafte Werkstoffe für das Material der Zwischenlage haben sich technisches Reinnickel des Typs Ni 99,2 (Werkstoff Nr. 2.4066) oder LC Ni 99 (Werkstoff Nr. 2.4068) bewährt. Ähnlich gute Ergebnisse konnten bei der Herstellung von walzplattierten Panzerblechen mit einer Zwischenschicht aus titanstabilisiertem Reineisen des Typs St 14 Ti und St 14 Ti Vac erzielt werden. Beide Werkstoffe weisen eine Richtanalyse von 99 % Fe, 0,10 bis 0,20 % Ti, 0,20 bis 0,30 % Mn und 0,01 % C auf.

Die Verwendung einer Zwischenlage aus den genannten Werkstoffen hat darüberhinaus den Vorteil, daß nunmehr als Grundwerkstoff auch Werkstoffe einsetzbar werden, welche bei konventionellen Plattieren Schwierigkeiten bei der Verarbeitung zeigen. Derartige Grundwerkstoffe, wie sie beispielsweise im Flugzeugbau Verwendung finden, können hiebei zusätzlich 0,1 bis 3,5 Gew.-% Ni und/oder 0,1 bis I Gew.-% Mo und/oder 0,05 bis 0,35 Gew.-% V und/oder 0,1 bis 2 Gew.-% Co und/oder 0,1 bis 2 Gew.-% W enthalten. Insbesondere Chrom enthaltende Grundwerkstoffe härten bei der Wärmebehandlung auf und lassen sich bei üblichen Plattierverfahren nicht einfach verarbeiten.

Mit Vorteil ist die Ausgestaltung der Panzerplatte so getroffen, daß die Dicken des Grundwerkstoffes zwischen 35 und 65 % der Gesamtblechdicke und des Auflagewerkstoffes zwischen 65 und 35 % der Gesamtblechdicke, gewählt sind, wobei vorzugsweise die Dicken des Grundwerkstoffes und des Auflagewerkstoffes im wesentlichen gleich sind.

Im Rahmen von Versuchen wurde festgestellt, daß die Mindestschichtdicke der Zwischenschicht vorteilhafterweise nicht unter 0,05 mm gewählt werden soll.

Der Verbundwerkstoff kann in der Folge durch Härten und Anlassen vergütet werden, wobei Vergütungen auf eine Härte von 55 bis 60 HRC für den Auflagewerkstoff und von etwa 40 bis 50 HRC für den Grundwerkstoff ohne weiters erzielbar waren. Selbst bei mehreren nahe nebeneinander liegenden Treffern konnte außerhalb der Einschlagstellen keine Beschädigung durch Abplatzen beobachtet werden, und auch Treffer mit Durchschlag zeigten keine weiteren Schäden an der Panzerplatte.

Das erfindungsgemäße Panzerblech kann bereits mit geringen Gesamtblechdicken von beispielsweise 8 bis 10 mm mit Erfolg eingesetzt werden, wobei sich Versuchsbleche, welche nach dem Fertigwalzen 3,8 mm Auflage, 3,8 mm Grundwerkstoff und 0,2 mm Zwischenschicht aufwiesen, sowohl bei Verwendung von Reinnickel als auch bei Verwendung von titanstabilisiertem Reineisen gegenüber konventionellen Panzerblechen als deutlich überlegen gezeigt haben. Insgesamt können aber ohne weiteres Gesamtblechdicken mit beispielsweise für Panzer üblichen Dimensionen von etwa 200 mm wie angegeben dimensioniert und insbesondere auch mehrlagig ausgebildet werden.

**Patentansprüche**

1. Panzerblech mit einem Grundwerkstoff aus zähem Stahl, auf welchen durch Plattieren wenigstens eine harte, dem Beschuß zuzuwendende Auflage aus Stahl aufgebracht ist, wobei jeweils zwischen Grundwerkstoff und Auflage eine Zwischenlage aus Reinnickel oder Reineisen, mit einer Dicke zwischen 0,1 und 15% der Gesamtblechdicke angeordnet ist, welche durch Walzplattieren mit dem Grundwerkstoff und der Auflage verbunden ist.

2. Panzerblech nach Anspruch 1, dadurch gekennzeichnet, daß die Zwischenlage aus titan- oder niobstabilisiertem Reineisen mit maximal 0,01 Gew.-% C besteht.

3. Panzerblech nach Anspruch 1 oder 2, dadurch gekennzeichnet, daß der Grundwerkstoff aus einem Stahl einer Richtanalyse von 0,10 bis 0,35 Gew.-% C, 0,10 bis 0,70 Gew.-% Si, 0,4 bis 1,50 Gew.-% Mn, 0,80 bis 2 Gew.-% Cr, Rest Eisen und Stahlbegleiter besteht.

4. Panzerblech nach Anspruch 1, 2 oder 3, dadurch gekennzeichnet, daß die Auflage aus Stahl vom Typ 85 Cr Mo 7, bestehend aus 0,60 bis 1 Gew.-% C, 0,20 bis 1,20 Gew.-% Si, 0,20 bis 2 Gew.-% Mn, 0,80 bis 2 Gew.-% Cr, 0,05 bis 1 Gew.-% Mo, 0,05 bis 0,35 Gew.-% V, Rest Eisen und Stahlbegleiter besteht.

5. Panzerblech nach einem der Ansprüche 1 bis 4, dadurch gekennzeichnet, daß die Dicke der Zwischenlage nach dem Verbundwalzen 1 bis 15% der Gesamtschichtstärke beträgt.

6. Panzerblech nach einem der Ansprüche 1 bis 5, dadurch gekennzeichnet, daß die Dicken des Grundwerkstoffes zwischen 35 und 65% der Gesamtblechdicke und des Auflagewerkstoffes zwischen 65 und 35% der Gesamtblechdicke gewählt sind.

7. Panzerblech nach einem der Ansprüche 1 bis 6, dadurch gekennzeichnet, daß die Dicken des Grundwerkstoffes und des Auflagewerkstoffes im wesentlichen gleich sind.

8. Panzerblech nach einem der Ansprüche 1 bis 7, dadurch gekennzeichnet, daß der Grundwerkstoff zusätzlich 0,1 bis 3,5 Gew.-% Ni und/oder 0,1 bis 1 Gew.-% Mo und/oder 0,05 bis 0,35 Gew.-% V und/oder 0,1 bis 2 Gew.-% Co und/oder 0,1 bis 2 Gew.-% W. enthält.

9. Panzerblech nach einem der Ansprüche 1 bis 8, dadurch gekennzeichnet, daß die Zwischenlage eine Richtanalyse von 99% Fe, 0,10 bis 0,20% Ti, 0,20 bis 0,30% Mn und 0,01% C aufweist.

10. Panzerblech nach einem der Ansprüche 1 bis 8, dadurch gekennzeichnet, daß die Zwischenlage aus Ni 99,2 oder LC Ni 99, mit einer Zusammensetzung von C ≤ 0,02, Si ≤ 0,2, Mn ≤ 0,35, S ≤ 0,005, Fe ≤ 0,4, Cu ≤ 0,25, Ni ≥ 99,0 Gew.-%, besteht.

**Claims**

1. Armour plate comprising a base material of tough steel onto which by cladding at least one hard layer of steel is bonded facing projectile impact, wherein between base material and cladding material, respectively, an interlayer of pure nickel or pure iron having a thickness of from 0,1 to 15% of the total plate thickness is arranged, being bonded with the base material and with the cladding material by roll bonding.

2. Armour plate as claimed in claim 1, characterised in that the interlayer consists of titanium or niobium stabilised pure iron containing 0,01% by weight C at maximum.

3. Armour plate as claimed in claim 1 or 2, characterised in that the base material consists of a steel having a guide analysis of 0,10 to 0,35% by weight C, 0,10 to 0,70% by weight Si, 0,4 to 1,50% by weight Mn, 0,80 to 2% by weight Cr, balance iron and minute steel impurities.

4. Armour plate as claimed in claim 1, 2 or 3, characterised in that the cladding material is made of steel of the type 85 Cr Mo 7 consisting of 0,60 to 1% by weight C, 0,20 to 1,20% by weight Si, 0,20 to 2% by weight Mn, 0,80 to 2% by weight Cr, 0,05 to 1% by weight Mo, 0,05 to 0,35% by weight V, balance iron and minute steel impurities.

5. Armour plate as claimed in any one of claims 1 to 4, characterised in that the thickness of the interlayer after roll bonding is 1 to 15% of the total thickness.

6. Armour plate as claimed in any one of claims 1 to 5, characterised in that the thickness of the base material and of the cladding material are chosen to be 35 to 65% and 65 to 35%, respectively, of the total plate thickness.

7. Armour plate as claimed in any one of claims 1 to 6, characterised in that the thickness of the base material and of the cladding material are substantially equal.

8. Armour plate as claimed in any one of claims 1 to 7, characterised in that the base material additionally contains 0,1 to 3,5% by weight Ni and/or 0, 1 to 1% by weight Mo and/or 0,05 to 0,35% by weight V and/or 0,1 to 2% by weight Co and/or 0,1 to 2% by weight W.

9. Armour plate as claimed in any one of claims 1 to 8, characterised in that the guide analysis of the interlayer is 99% Fe, 0,10 to 0,20% Ti, 0,20 to 0,30% Mn and 0,01% C.

10. Armour plate as claimed in any one of claims 1 to 8, characterised in that the interlayer consists of Ni 99,2 or LCNi 99 having an analysis of C ≤ 0,02, Si ≤ 0,2, Mn ≤ 0,35, Si ≤ 0,005, Fe ≤ 0,4, Cn ≤ 0,25, Ni ≥ 99,0 % by weight.

## Revendications

1. Plaque de blindage caractérisée en ce qu'elle comporte un matériau de base en acier dur, sur lequel est appliqué par plaquage au moins un revêtement dur, à tourner vers le tir, en acier, où, chaque fois entre le matériau de base et le revêtement est disposée une couche intermédiaire en nickel pur ou en fer pur, qui a une épaisseur comprise entre 0,1 et 15% de l'épaisseur totale de la plaque, et qui est liée au matériau de base et au revêtement par plaquage par laminage.

2. Plaque de blindage selon la revendication 1, caractérisée par le fait que la couche intermédiaire se compose de fer pur stabilisé par du titane ou du niobium, avec 0,01% en poids de C au maximum.

3. Plaque de blindage selon l'une des revendications 1 ou 2, caractérisée par le fait que le matériau de base se compose d'un acier ayant une analyse élémentaire de 0,10 à 0,35% en poids de C, 0,10 à 0,70% en poids de Si, 0,4 à 1,50% en poids de Mn, 0,80 à 2% en poids de Cr, le reste étant du fer et les impuretés accompagnant l'acier.

4. Plaque de blindage selon l'une des revendications 1, 2 ou 3, caractérisée par le fait que le revêtement se compose d'acier du type 85 Cr Mo 7, se composant de 0,60 à 1% en poids de C, 0,20 à 1,20% en poids de Si, 0,20 à 2% en poids de Mn, 0,80 à 2% en poids de Cr, 0,05 à 1% en poids de Mo, 0,05 à 0,35% en poids de V, le reste étant du fer et les impuretés accompagnant l'acier.

5. Plaque de blindage selon l'une des revendications 1 à 4, caractérisée par le fait que l'épaisseur de la couche intermédiaire, après le laminage composite, s'élève à 1 à 15% de l'épaisseur totale des couches.

6. Plaque de blindage selon l'une des revendications 1 à 5, caractérisée par le fait que l'épaisseur du matériau de base est choisie entre 35 et 65% de l'épaisseur totale de la plaque, et celle du matériau de revêtement, entre 65 et 35% de l'épaisseur totale de la plaque.

7. Plaque de blindage selon l'une des revendications 1 à 6, caractérisée par le fait que l'épaisseur du matériau de base et celle du matériau de revêtement sont sensiblement égales.

8. Plaque de blindage selon l'une des revendications 1 à 7, caractérisée par le fait que le matériau de base contient en outre 0,1 à 3,5% en poids de Ni et/ou 0,1 à 1% en poids de Mo et/ou 0,05 à 0,35% en poids de V et/ou 0,1 à 2% en poids de Co et/ou 0,1 à 2% en poids de W.

9. Plaque de blindage selon l'une des revendications 1 à 8, caractérisée par le fait que la couche intermédiaire présente une analyse élémentaire de 99% de Fe, 0,10 à 0,20% de Ti, 0,20 à 0,30% de Mn et 0,01% de C.

10. Plaque de blindage selon l'une des revendications 1 à 8, caractérisée par le fait que la couche intermédiaire se compose de Ni 99,2 ou de LC Ni 99, avec une composition en % en poids de C ≤ 0,02, Si ≤ 0,2, Mn ≤ 0,35, S ≤ 0,005, Fe ≤ 0,4, Cu ≤ 0,25, Ni ≥ 99,0.